# EUROPEAN PATENT SPECIFICATION

(11) **EP 2 299 008 B1**
(45) Date of publication and mention of the grant of the patent: **15.05.2013**
(21) Application number: 10171851.8
(22) Date of filing: 04.08.2010
(51) Int. Cl.: B62D 25/10, E02F 9/00, E02F 9/08

(54) **Bonnet structure for an engine of an operating machine**
Abdeckungsvorrichtung für den Motor einer Funktionsmaschine
Structure du bonnet pour le moteur d'une machine d'operation

(30) Priority: 17.09.2009 IT TO20090707
(43) Date of publication of application: 23.03.2011
(73) Proprietor: Soilmec S.p.A., 47023 Cesena (FO) (IT)
(72) Inventor: Ditillo, Alessandro, 47023 Cesena (FC) (IT); Massari, Stefano, 47023 Cesena (FC) (IT)
(74) Representative: Di Gennaro, Sergio

(56) References cited:
- WO-A-01/76912
- WO-A-2007/032242
- US-A1- 2009 140 548

## Description

The present invention relates to a bonnet structure for an engine body of a machine. In particular, the present invention relates to a bonnet structure that can be associated to machines of the type used in the sector of foundations (for example earth-moving machinery, boring machines and cranes, either tracked or on wheels), adapted to cover an opening for access to the compartment of the engine body. The part of operating machine that has as casing the bonnet in question is generally defined as: "engine compartment" or "base machine" or "turret". The state of the art already today makes the installation of these internal-combustion-engine assemblies complex in so far as the specifications required for their operation lead to the need for difficult compromises between the volume occupied by the engine body itself and the remaining components necessary for operation of the machine, which is to be housed in the base machine. This delicate situation, which imposes the need to make as compact as possible the overall dimensions, at the same time allowing adequate aeration for the engine, is bound to become further complicated with next-generation engines. Standards currently in force in the industrial sector impose limitations on the gaseous emissions, which are becoming increasingly straitened. This constraint is solved by engine designers by adopting new technical solutions, but generally these are obtained by increasing above all the radiant masses required for proper operation of the engine. Modern internal-combustion engines, which are generally of a diesel type and which will supply in the near future said machines will hence require radiant masses of considerable size, which may increase up to 1.5-2 times the current ones. In addition, further accessories such as particulate filters, urea-SCR (selective catalytic reduction) system, storage tanks, exhaust pipes, etc. (i.e., what was previously defined as "new technical solutions") are provided in addition to the already existing applications, and this involves an increase in the problems regarding overall dimensions and the corresponding heat-exchange phenomena.

It may be assumed that the overall dimensions of the base machine will increase, whereas the external dimensions must remain substantially unaltered in so far as there exist legislative constraints for the conditions of transport. For example, in Europe typical maximum widths are of approximately 2.5 m; otherwise, it is necessary to request special authorizations for transportation.

This constraint in width will necessarily lead to an increase in the length and/or in the height of new operating machines and a reduction of space in the compartments today provided for storage of the air that is used for cooling the liquids and the engine. In fact, in addition to the radiant masses used for the internal-combustion engine, there exist also problems of cooling for the hydraulic oil, for the internal environment of the cab (driving seat, in which the operator controls the operations of the machine, which hence requires a suitable air-conditioning system), and for special additional equipment. This means that the base machine is to a large extent, if not in certain cases, as a whole, occupied by openings for the necessary flow of air for forced cooling.

In order to be able to guarantee passage of the required volume of air it will hence be necessary to increase the open areas of the bonnets, and this will lead to a greater diffusion of noise towards the external working environment, said noise being generated not only by the internal-combustion engine but also and above all by the fast rotation of the fans of the radiant masses. The greater the openings on the vertical stretch of the bonnet panels of the base machine, the louder the noise that will be perceived by the worksite staff. Already today, the existing openings imply noise levels that in restricted environments, caused by the acoustic reflection, produce effects that are harmful for the operator and in certain cases make it necessary to use additional shielding systems to stay within the parameters imposed by law.

In an attempt to overcome this problem, a solution that is in some cases resorted to when use of the machinery is exclusively for interiors (i.e., inside buildings or for the construction of tunnels) is that of replacing the internal-combustion-engine units with electrically powered systems. In these cases, the gaseous emissions are eliminated, and part of the noise is reduced, but there remains the problem of having to supply adequately all the other radiant masses present, which are in any case sources both of heat and of noise.

A solution currently adopted envisages adding in the area of the bonnets of the engine compartment traditional external appendages closed on three sides and at the bottom and open only upwards, in such a way as to create a top opening and enable cooling and a good passage of air, and at the same time, since they reflect the noise upwards, they have the effect of reducing the level of noise perceived at operator level.

The top opening is generally protected by grills to prevent undesirable material from possibly being drawn in (e.g., leaves, stones, etc.).

Said solution, however, means that the appendages increase the external dimensions of the machine and have to be removed during transport, which involves time for dismantling and space for positioning these objects during the movements.

Furthermore, to carry out interventions under the bonnets, such as maintenance operations, repairs, adjustments, etc., which are very frequent on worksites, the persons responsible for carrying out these tasks have to climb on the wheel belts of the undercarriage or on walkways usually provided above the wheel belts of the machine, and hence in some cases they are at dangerous and in any case risky heights, considering also the presence of elements that are likely to constitute risks of cutting, such as for instance the edges of wheel belts or else cutting tools, drilling accessories, etc. that are frequently left around on the plane of site. Given the dangers involved, it is expedient for said walkways to be provided with appropriate protections, such as parapets. Other parapets are compulsory when the walkway is provided above the bonnets of the base machine (for example, if required for reasons of maintenance because access from beneath is prevented). In order not to exceed the overall dimensions during transportation and to enable the machine to be set in its own condition of transport, the walkways and the parapets must be removed from the operating positions so causing waste of time and anyway requiring execution of operations that are in any case extremely risky, with the additional need to find spaces that are adequate to accommodate these objects. A bonnet structure according to the preamble of the independent claim is shown in US 2009140548.

The present invention overcomes the aforesaid drawbacks by providing a bonnet structure without aeration openings that, with a substantially vertical movement, can be raised to enable adequate access to the engine compartment for the necessary maintenance operations, with minimum occupation of space outwards during the displacements between the closed position and the raised position and by providing a fall-prevention parapet for the top walkways of the base machine; with a rocking movement (either manual or automatic) it can be opened to guarantee adequate circulation of the air necessary for the radiant masses, in any case reducing the noise perceived at operator level, and can be reclosed, eliminating the need for providing additional components to be removed during the steps of transportation.

The present invention is directed to a bonnet structure having the characteristics specified in the annexed claim 1. Further characteristics of the structure according to the present invention are contained in the annexed dependent claims. The characteristics and advantages of the bonnet structure according to the present invention will emerge more clearly from the ensuing description, which is provided by way of nonlimiting example, of one embodiment with reference to annexed figures, wherein:
- Figure 1a is a schematic perspective view of a portion of an operating machine referred to as base machine, equipped with the bonnet structure in a closed position according to the present invention;
- Figure 1b is a schematic front view of the machine of Figure 1a;
- Figure 2a is a schematic perspective view of a portion of an operating machine equipped with the bonnet structure in a raised position according to the present invention;
- Figure 2b is a schematic front view of the machine of Figure 2a;
- Figure 2c is a schematic front view of the machine of Figure 2a during an intermediate step of raising of the bonnet;
- Figure 2d is a front view the bonnet structure according to a further embodiment of the present invention;
- Figure 3a is a perspective view of the bonnet structure in the open position, according to the present invention;
- Figure 3b is a perspective view of a further embodiment of the present invention, with the bonnet structure the in open position;
- Figure 4 is a perspective view of the bonnet structure according to a further embodiment of the present invention;
- Figure 5 is a perspective view of the portion of base machine indicated in Figure 1a, with a combination of arrangements according to the present invention.

With reference to the above figures, bonnet structure 2 according to the present invention can be applied to an operating machine, already described previously (including in this definition all machines that carry out works for laying foundations, such as: drilling, consolidation, pile driving, excavation, digging of trenches, and hoisting machines, such as for example cranes) in the lateral position (where by "lateral" is meant the left side or right side of the operating machine, not including the front side, which is generally left free for the cab and the rear side, where a counterweight is generally present), in the proximity of a possible parapet P that protects a communication trench C or walkway, used for operations of maintenance, repair, and adjustments, or else for the operations of opening and closing of the bonnet itself or as access to driving cab 40.

The structure comprises at least one substantially vertical shield 21, preferably without aeration openings, and at least one substantially horizontal cover 22, adapted in a closed position to join along an edge of their own and to shield an opening within which the engine and/or the radiant masses to be subjected to aeration are present.

Said shield 21 can be brought into a first, open, position, or aeration position, via rotation about a horizontal bottom axis O, so as to set itself inclined with respect to the vertical and to generate an open space between its top edge and top cover 22, said open space having the function of air passage and in particular of air intake in the case where the flow is an intake flow, or emission outlet in the opposite case, i.e., in the case of a forcing flow of air. This position is considered as working position; consequently, it has the characteristic of having to remain in this geometrical configuration without creating problems for operation of the internal components of the machine and simultaneously allow full visibility for the operator.

The rotation of shield 21 with respect to a horizontal bottom axis set in the vicinity of the frame, enables minimization of the bottom opening between vertical shield 21 and frame 24 so as not to render necessary any further bottom shielding.

Said top open space is advantageously occupied by at least one grill 23, which can be purposely pulled shut manually when it is necessary to prevent intrusion of undesirable elements within the compartment that might damage the radiant masses or the components inside the base machine.

The grill can also be actuated automatically, for example by constraining it to shield 21 and getting it to move simultaneously with opening of the latter. For example by drawing it along an appropriate counterframe (not represented) equipped with guides and fixed to top cover 22 or to frame 24. At least one vertical element 25 is set on each of the side walls of the compartment, created when the shield is brought into an open position, so as to keep the substantially vertical walls shielded.

Furthermore, the vertical shield is constrained to a frame 24, preferably sized for supporting the structure of the bonnet, by means of said opposed vertical elements 25, made advantageously of rigid soundproofing material.

These elements are connected together to frame 24 and to shield 21 with hinges set on the edges so as to enable their arrangement in a direction parallel to the shield itself when this is in a position with the air intake or the emission mouth closed, thus minimizing the encumbrance thereof. When the shield is closed, elements 25 will be set on top of one another in bellows fashion.

The embodiment of elements 25 could be obtained in multiple ways: with proper bellows, with flexible structures made of a material and with a thickness suitable for shielding the noise, telescopic, or again slidable, or else pivoting on a hinge that is fixed with respect to axis of rotation O of vertical shield 21. The characteristic that all these embodiments share is that of passing from a position where the shield is entirely contained inside the engine compartment, when it is in a closed position, to a position of lateral shielding, when the shield is open so as to provide a top air passage.

The top opening hence enables the air to pass in the two directions, i.e., both into and out of the machine, enabling inlet of fresh air for the radiant masses or outlet of hot air (deriving from the forced cooling of the radiant masses or from the internal-combustion engine)that are generally positioned opposed to one another in the internal architecture of the base machine so as not to interfere with one another. The outlet of hot air enables the internal temperature to be stabilized at lower values.

The bonnet structure further comprises a main support 26 for engagement to the load-bearing structure of the machine, and a mechanism for moving shield 21 and possibly top covering panel 22 and grill 23. Said mechanism is able to move the shield itself substantially in a vertical direction parallel to itself so that the bonnet structure in a raised position presents shield 21 above said opening, substantially aligned and parallel to when it is in a closed position.

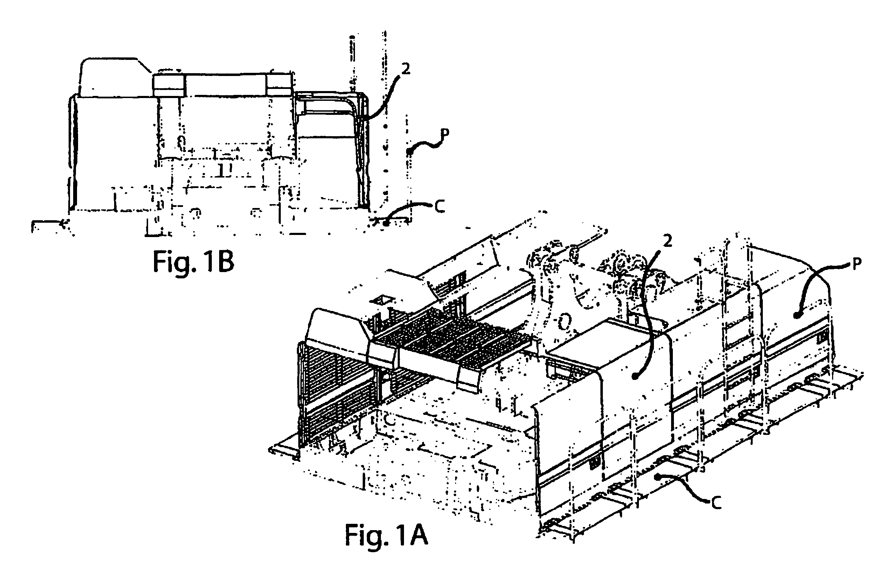

For this purpose, in the embodiment shown in Figures 1, 2, and 3a the bonnet structure comprises for each of its sides two rigid arms 27 that constitute the elements of connection between shield 21 and frame 26 typical of articulated-parallelogram or pantograph mechanisms, pivoted at one of their ends 31 to the main support and at the opposite end to frame 24 of the bonnet structure through hinges 29 so as to be able to rotate and keep shield 21 with a substantially vertical orientation when the latter is being raised.

The points of junction of the arms on the main support enable the entire bonnet to be raised at the same time minimizing the encumbrance outwards.

In fact, the opening systems most widely used in the sector of operating machines are provided by hinges with vertical axis that secure the vertical shield to the frame, making it pivoting with respect thereto.

The width of the panels for access to the base machine is sized in relation to the required degree of internal accessibility and to the type of components. In many cases, these panels can reach and exceed 2 m in length. It is evident how this represents a severe limit as walkways C equipped with parapet P must consequently be of adequate width such as to enable complete opening of the panel (and hence they must exceed two metres in width, which entails encumbrance and weights that are difficult to handle during transportation). Consequently, providing an opening mechanism that occupies a minimum encumbrance (less than 40 cm) on the parapet, it enables instead provision of narrower walkways and full compatibility with the presence of parapet P. Furthermore, it also enables working with the operating machine on the worksite given that its encumbrance in width are reduced to the bare minimum.

An additional requisite is that, when the shield is open, it should not hinder the possibility of access to the top areas and should leave a walkway free for access of the operators that must carry out any maintenance.

To limit external encumbrance to a minimum, said arms 27 are preferably shaped substantially at right angles, and the structure is raised preferably with the aid of at least one spring device 28 (typically gas-operated springs such as the ones used in the automotive sector) to facilitate movement thereof as this reduces the effort required by the operator for opening the shield and advantageously blocks the shield itself in the raised position. There may even be two spring devices 28, mounted opposed to one another on the two sides of the vertical panel.

Alternatively, once the shield has been raised completely, it is necessary to fix it to the frame with an arrest device not represented (for example a bolt, a blocking rod, etc.), to ensure blocking thereof and to enable the working staff to operate in conditions of complete safety.

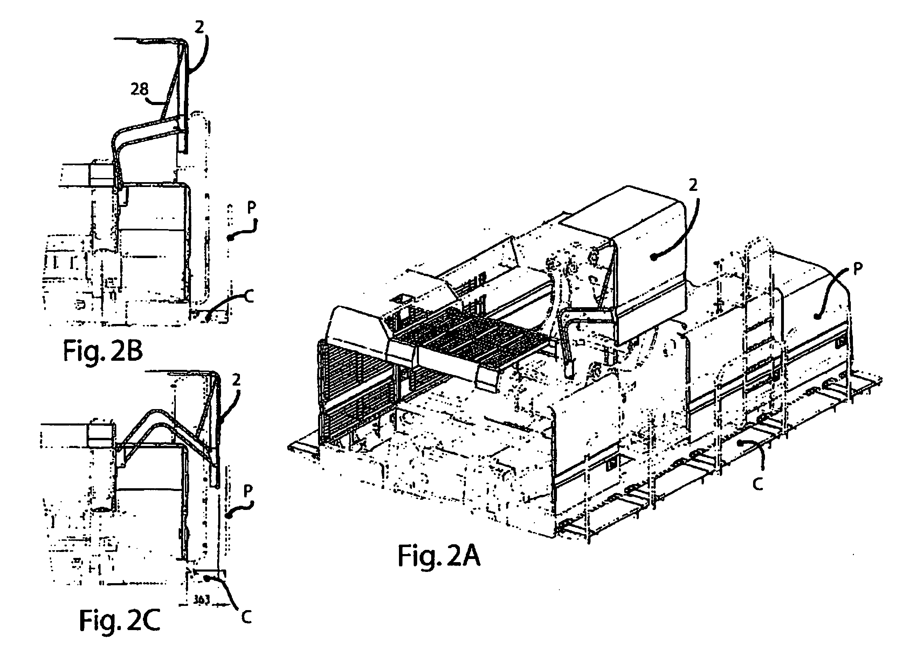

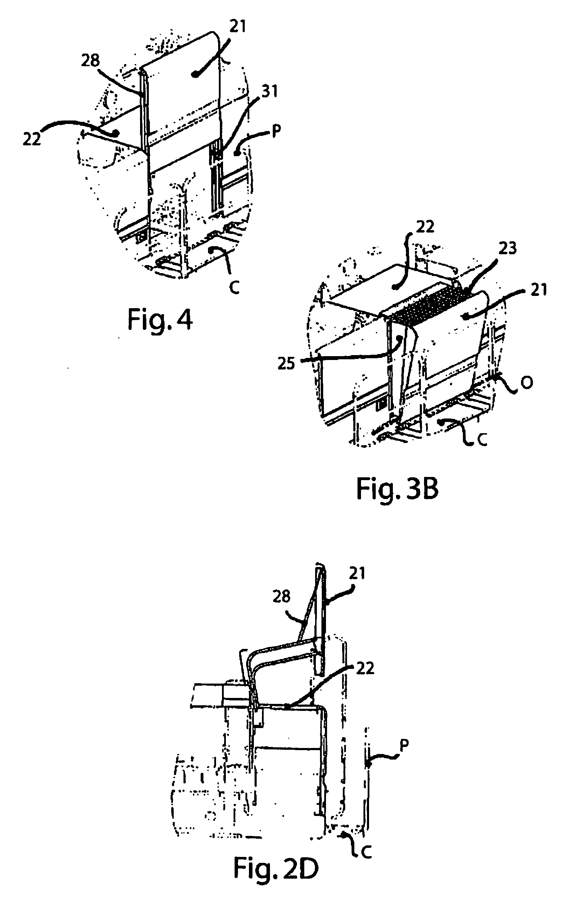

Figure 2d shows a variant of the solution described previously, in which top cover 22 remains fixed to the frame, whilst just the vertical shield is brought into the raised position. This solution enables the lifting of lighter structures, but on the other hand does not leave a good degree of accessibility for maintenance operations and freedom of movement on the top walkways.

In the embodiment of Figure 4, instead, the movement mechanism comprises a pair of lateral telescopic guides 31 supported by spring devices 28 (typically gas-operated springs), which are able to assist raising of shield 21 in a vertical direction and possibly to keep it fixed in the raised position. In addition or as an alternative, it is always possible to apply a common blocking device (not represented) that ensures the position of the shield with respect to the frame, when the former is in the raised configuration. Unlike the previous solution, this latter type of solution enables yet a further reduction in the external encumbrance in the direction of the walkway, during the raising steps, in which the panel moves parallel to itself and thus enables a reduction to a minimum of the widths of the walkways themselves. Furthermore, the absence of the arms of the mechanism leaves the passage free for a top walkway on the bonnets, which allows freedom of movement of working staff.

The bonnet, in the raised position and blocked by an appropriate arrest device (not represented), can function as fall-prevention parapet if appropriately sized for the purpose so as to comply with standard requirements. Also the device for blocking shield 21 in the raised position could be rendered accessible only from the bottom position in such a way that the persons that transit along the top walkway cannot release it in any way, with the risk of causing shield 21 to drop down, thus in effect removing the fall-prevention protection. In this case, then, to guarantee safe access to the top parts of the bonnet it will be sufficient to raise all the bonnets, blocking them in the top position.

In a further embodiment, by making shield 21 and top cover panel 22 fixed with respect to one another, the telescopic guides are able to raise also the cover itself so as to enable opening of a passage in the bonnets, thus creating an access both from the front and from the top and hence making for greater accessibility in the case of maintenance. This prevents having to provide openings located on the top wall, which is generally fixed, removable with screws, or closed by suitable locks to enable adequate protection against vandalism.

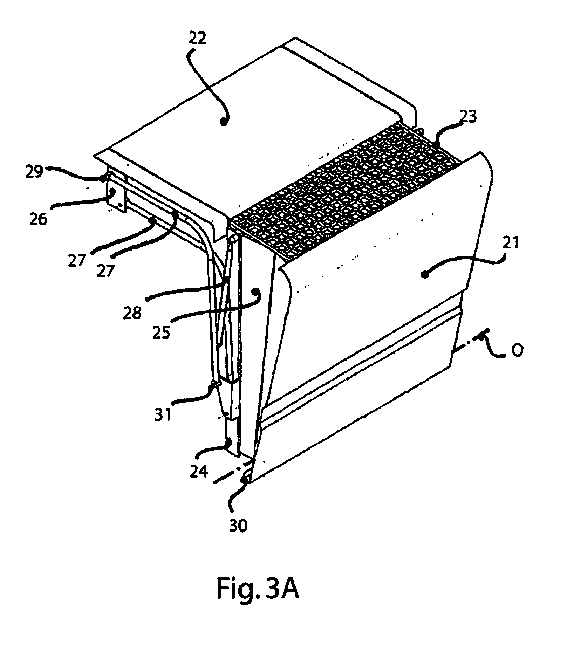

As described previously for the first embodiment and as shown in Figure 3b, it is possible also in this case to get the vertical shield to oscillate about a horizontal bottom axis O so as to set it inclined with respect to the vertical and generate an open space between its top edge and top cover 22. As described previously, there will be present lateral elements with a shielding function. In this way, it is possible not to provide openings on the vertical wall of shield 21, thus reducing the noise emitted at worker level.

Furthermore, the foldable elements that constitute the side walls of the bonnet in the open position can be made directly of rigid soundproofing material. Alternatively, they can be metal shields, bellows, or any type of flexible element that shields noise.

The operations of opening and closing of the embodiments of bonnet described can be carried out manually when the machine passes from an inactive condition to an operating condition, and vice versa. It is possible also to automate the movement and render it remote-controlled, directly from the driving seat (in this case, the system is completed with actuators controlled by appropriate, preferably electrically or hydraulically controlled selectors).

In cold environments or for start-up at low temperatures, exploiting the total closing of the bonnets, it is advantageously possible to delay opening of said bonnets in order to reach the ideal temperature faster. In fact, in these applications there is almost always envisaged insertion of a shielding for closing all the openings present to facilitate reaching of steady running conditions of the systems. Since it already has the external vertical walls closed for reducing noise emissions, this architecture is consequently advantageously usable for heating the internal environment by not allowing the heat produced by the internal-combustion engine to exit.

If the system is equipped with an automatic drive, this can be activated either by the operator or by a control of the temperature of the engine compartment, which, once a minimum threshold is reached, will activates opening of the bonnets, enabling the air to pass through the top openings. Obviously, since opening is controlled by actuators it could even be partialized and not merely be of an on-off type (i.e., all open or all closed).

Once the bonnet is reclosed, it can be moved from an all-closed position to a raised position (to enable access for maintenance operations), without excessively invading the space at the sides. This enables reduction to a minimum of the widths of the walkways, enabling simultaneous presence of the parapets, to the advantage of safety.

Once appropriately blocked by an arrest device, the bonnets in the raised position can assume the role of fall-prevention protections (parapets) for walkways on the uppermost bonnets, which are required for carrying out maintenance operations.

The movement of the shield into the open position or position of aeration could occur not only by rocking about a bottom axis, but also by translating possibly in a non-symmetrical way so that the top portion is much more distant from the frame than the bottom one.

The aeration opening in some cases could even be set facing downwards (if required to increase the air passages or to simplify the structure of the bonnet itself and of its mechanism). In the aeration position, the shield can be provided at the bottom with a device 30 for collecting and conveying water, thus preventing the latter from possibly entering the engine compartment.

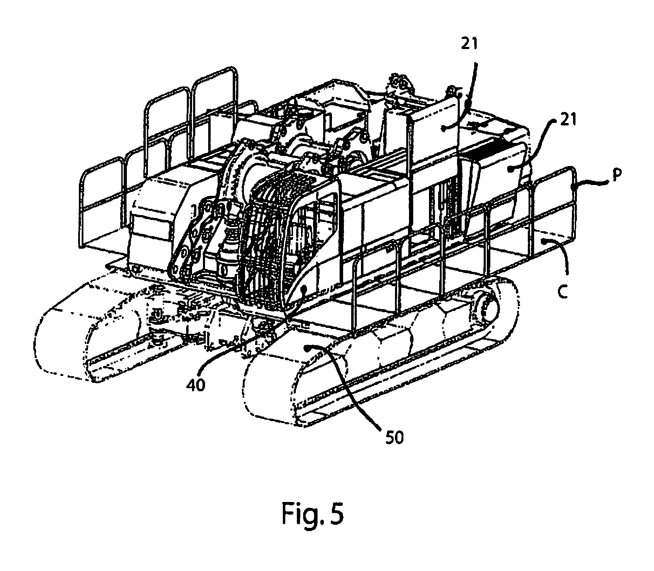

On the basis of the operating needs and requirements it is possible to exploit advantageously the different embodiments described. Furthermore, as represented in Figure 5, all the openable bonnets of the machine can be built as described, guaranteeing ease of access to the entire base machine in combination with the presence of walkways C and parapets P that will enable working in maximum safety, minimizing the times required for preparing the machine for transportation.

## Claims

1. Bonnet structure for an engine body of an operating machine positionable on at least one of the side walls of the machine, in the proximity of a possible parapet (P) that protects a walkway (C),
said bonnet structure comprising a substantially vertical shield (21) preferably without openings and a substantially horizontal cover (22), adapted, with the bonnet structure in a closed position, to join to and shield an opening within which the engine and/or the radiant masses to be subjected to aeration are/is present,
said bonnet structure comprising a mechanism for moving the shield (21), which is able to move said shield (21) substantially in a vertical direction, parallel to itself, so that the bonnet structure, in a raised position, presents the shield (21) in a position such as to remain substantially aligned with respect to when it is in a closed position, at the same time leaving the possibility of access to the top bonnet portion unaltered;
**characterized in that** when the structure is in a closed position, said shield (21) can be moved so as to move into a position where it is open at the top.

2. Structure according to claim 1, wherein at least one vertical element (25) is set on each of the side walls of the compartment created when the shield is brought into an open position so as to keep the openings created on the side walls between the shield (21) and its original closing position shielded.

3. Structure according to claim 1, wherein said mechanism for moving the shield moves, together with the shield (21), also the substantially horizontal cover (22).

4. Structure according to claim 1, wherein said mechanism for movement comprises, for each side of the structure, a pair of arms (27), pivoted, at one of their ends, to a main support (26) and, at the opposite end, to a frame (24) of the bonnet structure so as to be able to rotate and keep the shield (21) during raising according to a substantially vertical orientation.

5. Structure according to claim 4, wherein said arms are shaped substantially at right angles and the structure is raised with the aid of at least one spring device (28).

6. Structure according to claim 1, wherein the shield (21) is able to rotate about a horizontal bottom axis (O) so as to set itself inclined with respect to the vertical and to generate an open space, between its top edge and the substantially horizontal cover (22), that has the function of air passage.

7. Structure according to claim 6, wherein said open space is occupied by a grill (23), which can be purposely pulled when it is necessary to prevent intrusion of undesirable elements within the compartment that might damage the radiant masses and/or the internal components.

8. Structure according to claim 7, wherein the grill is actuated automatically.

9. Structure according to claim 8, wherein the grill is constrained to the shield (21) and moves simultaneously with opening of the latter.

10. Structure according to claim 1, wherein the vertical shield is constrained to the frame (24) by means of opposed vertical elements (25), made of rigid soundproofing material, which are connected together, to the frame, and to the panel with hinges set on the edges so as that they are contained within the part shielded by the bonnet when the panel is in the position with the air intake closed.

11. Structure according to claim 1, wherein the mechanism for movement comprises a pair of lateral telescopic guides (31) supported by at least one spring device (28) that is able to raise the shield (21) into a vertical position.

12. Structure according to claim 1, wherein a plurality of bonnets are mountable on the sides of the operating machine.

13. Structure according to claim 1, wherein the opening mechanisms are actuated remotely and moved by actuators.

14. Structure according to claim 13, wherein the command for opening is managed automatically on the basis of the temperature of the engine compartment.

## Patentansprüche

1. Haubenstruktur für einen Motorkörper einer Betätigungsmaschine, positionierbar an zumindest einer der Seitenwände der Maschine in der Nähe einer möglichen Brüstung (P), die einen Gang (C) schützt,
die Haubenstruktur umfassend eine im Wesentlichen vertikale Abschirmung (21) vorzugsweise ohne Öffnungen und eine im Wesentlichen horizontale Abdeckung (22), die, wenn die Haubenstruktur in einer geschlossenen Position ist, dazu geeignet ist, sich mit einer Öffnung zu verbinden und diese abzuschirmen, innerhalb welcher die Maschine und/oder die Strahlungsmassen, die Luftzufuhr ausgesetzt werden sollen, vorhanden ist/sind,
die Haubenstruktur umfassend einen Mechanismus zum Bewegen der Abschirmung (21), der dazu imstande ist, die Abschirmung (21) im Wesentlichen in einer vertikalen Richtung parallel zu sich selbst zu bewegen, sodass die Haubenstruktur in einer angehobenen Position die Abschirmung (21) in einer derartigen Position aufweist, dass sie im Wesentlichen bezüglich dazu, wenn sie sich in einer geschlossenen Position befindet, ausgerichtet ist, wobei gleichzeitig die Zugangsmöglichkeit zum oberen Haubenabschnitt unverändert bleibt;
**dadurch gekennzeichnet, dass** die Abschirmung (21), wenn die Struktur in einer geschlossenen Position ist, zum Bewegen in eine Position bewegt sein kann, in der sie an der Oberseite offen ist.

2. Struktur nach Anspruch 1, wobei zumindest ein vertikales Element (25) an jeder der Seitenwände der Abteilung eingerichtet ist, welche geschaffen ist, wenn die Abschirmung in eine offene Position verbracht ist, um die Öffnungen abgeschirmt zu halten, welche an den Seitenwänden zwischen der Abschirmung (21) und ihrer ursprünglichen Schließposition geschaffen sind.

3. Struktur nach Anspruch 1, wobei der Mechanismus zum Bewegen der Abschirmung zusammen mit der Abschirmung (21) außerdem die im Wesentlichen horizontale Abdeckung (22) bewegt.

4. Struktur nach Anspruch 1, wobei der Mechanismus zum Bewegen für jede Seite der Struktur ein Paar Arme (27) umfasst, die an einem ihrer Enden an eine Hauptstütze (26) und am entgegengesetzten Ende an einen Rahmen (24) der Haubenstruktur angelenkt sind, um imstande zu sein, die Abschirmung (21) während des Anhebens zu drehen und gemäß einer im Wesentlichen vertikalen Ausrichtung zu halten.

5. Struktur nach Anspruch 4, wobei die Arme im Wesentlichen rechtwinklig geformt sind und die Struktur mithilfe von zumindest einer Federvorrichtung (28) angehoben wird.

6. Struktur nach Anspruch 1, wobei die Abschirmung (21) dazu imstande ist, um eine horizontale Bodenachse (O) zu drehen, um sich bezüglich der Senkrechten geneigt einzustellen und einen offenen Raum zwischen ihrer Oberkante und der im Wesentlichen horizontalen Abdeckung (22) zu erzeugen, der die Funktion eines Luftkanals aufweist.

7. Struktur nach Anspruch 6, wobei der offene Raum von einem Rost (23) belegt ist, der absichtlich gezogen werden kann, wenn es notwendig ist, den Eintritt von unerwünschten Elementen in die Abteilung zu verhindern, welche die Strahlungsmassen und/oder die Innenbauteile beschädigen könnten.

8. Struktur nach Anspruch 7, wobei der Rost automatisch betätigt ist.

9. Struktur nach Anspruch 8, wobei der Rost mit der Abschirmung (21) zwangsschlüssig ist und sich gleichzeitig mit dem Öffnen der Letzteren bewegt.

10. Struktur nach Anspruch 1, wobei die vertikale Abschirmung mit dem Rahmen (24) mithilfe von gegenüberliegenden vertikalen Elementen (25) aus starrem schalldämpfendem Material zwangsschlüssig ist, welche zusammen mit dem Rahmen und der Tafel mit Drehgelenken verbunden sind, die an den Kanten eingerichtet sind, sodass sie innerhalb des Teils enthalten sind, welches durch die Haube abgeschirmt ist, wenn die Tafel in der Position mit geschlossenem Lufteintritt ist.

11. Struktur nach Anspruch 1, wobei der Mechanismus zum Bewegen ein Paar seitliche Teleskopführungen (31) umfasst, die durch mindestens eine Federvorrichtung (28) gestützt sind, welche dazu imstande ist, die Abschirmung (21) in eine vertikale Position anzuheben.

12. Struktur nach Anspruch 1, wobei mehrere Hauben an den Seiten der Betätigungsmaschine anbringbar sind.

13. Struktur nach Anspruch 1, wobei die Öffnungsmechanismen fernbetätigt und durch Stellglieder bewegt sind.

14. Struktur nach Anspruch 13, wobei der Befehl zum Öffnen auf der Grundlage der Temperatur der Motorabteilung automatisch verwaltet ist.

## Revendications

1. Structure de capot pour un corps de moteur d'une machine de terrassement, positionnable sur au moins une des parois latérales de la machine, à proximité d'un éventuel parapet (P) qui protège une passerelle (C),
ladite structure de capot comprenant un bouclier sensiblement vertical (21) de préférence sans ouverture et un couvercle sensiblement horizontal (22), adapté, avec la structure de capot dans une position fermée, pour se joindre à et protéger une ouverture à l'intérieur de laquelle le moteur et/ou les masses rayonnantes destinés à être soumis à une aération sont/est présent(s),
ladite structure de capot comprenant un mécanisme pour déplacer le bouclier (21), qui est capable de déplacer ledit bouclier (21) sensiblement dans une direction verticale, parallèle à lui-même, pour que la structure de capot, dans une position élevée, présente le bouclier (21) dans une position telle à rester sensiblement aligné par rapport à la période durant laquelle il est dans une position fermée, laissant en même temps la possibilité d'accéder à la partie supérieure du capot inchangée ; **caractérisée en ce que**, lorsque la structure est dans une position fermée, ledit bouclier (21) peut être déplacé afin de se déplacer dans une position où il est ouvert au niveau de la partie supérieure.

2. Structure selon la revendication 1, dans laquelle au moins un élément vertical (25) est placé sur chacune des parois latérales du compartiment créé lorsque le bouclier est mis dans une position ouverte afin de maintenir les ouvertures créées sur les parois latérales entre le bouclier (21) et sa position de fermeture d'origine protégée.

3. Structure selon la revendication 1, dans laquelle ledit mécanisme pour déplacer le bouclier déplace, conjointement avec le bouclier (21), également le couvercle sensiblement horizontal (22).

4. Structure selon la revendication 1, dans laquelle ledit mécanisme pour le mouvement comprend, pour chaque côté de la structure, une paire de bras (27), pivotant, à une de leurs extrémités, sur un support principal (26) et, à l'extrémité opposée, sur un cadre (24) de la structure de capot afin d'être capables de tourner et maintenir le bouclier (21) durant l'élévation selon une orientation sensiblement verticale.

5. Structure selon la revendication 4, dans laquelle lesdits bras sont formés sensiblement à angle droit et la structure est élevée à l'aide d'au moins un dispositif à ressort (28).

6. Structure selon la revendication 1, dans laquelle le bouclier (21) est capable de tourner autour d'un axe inférieur horizontal (O) afin de se placer de façon inclinée par rapport à la verticale et de générer un espace ouvert, entre son bord supérieur et le couvercle sensiblement horizontal (22), qui remplit la fonction de passage d'air.

7. Structure selon la revendication 6, dans laquelle ledit espace ouvert est occupé par une grille (23), qui peut être tirée intentionnellement lorsqu'il est nécessaire d'empêcher l'intrusion d'éléments indésirables à l'intérieur du compartiment, qui pourraient endommager les masses rayonnantes et/ ou les composants internes.

8. Structure selon la revendication 7, dans laquelle la grille est actionnée automatiquement.

9. Structure selon la revendication 8, dans laquelle la grille est fixée au bouclier (21) et se déplace simultanément avec l'ouverture de ce dernier.

10. Structure selon la revendication 1, dans laquelle le bouclier vertical est fixé au cadre (24) au moyen d'éléments verticaux opposés (25), faits de matériau insonorisant rigide, qui sont raccordés ensemble, au cadre et au panneau, avec des charnières placées sur les bords afin qu'ils soient contenus à l'intérieur de la partie protégée par le capot lorsque le panneau est dans la position avec l'admission d'air fermée.

11. Structure selon la revendication 1, dans laquelle le mécanisme pour le mouvement comprend une paire de guidages télescopiques latéraux (31) supportés par au moins un dispositif à ressort (28) qui est capable d'élever le bouclier (21) dans une position verticale.

12. Structure selon la revendication 1, dans laquelle une pluralité de capots peuvent être montés sur les côtés de la machine de terrassement.

13. Structure selon la revendication 1, dans laquelle les mécanismes d'ouverture sont actionnés à distance et déplacés par des actionneurs.

14. Structure selon la revendication 13, dans laquelle la commande pour l'ouverture est gérée automatiquement en fonction de la température du compartiment moteur.
